# DEMANDE DE BREVET EUROPEEN

(11) **EP 3 139 608 A1**
(43) Date de publication de la demande: **08.03.2017**
(21) Numéro de dépôt: 16178762.7
(22) Date de dépôt: 11.07.2016
(51) Int. Cl.: H04N 19/176, H04N 19/119, H04N 19/147, H04N 19/61, H04N 19/11, H04N 19/107, H04N 19/109, H04N 19/14

(54) **PROCÉDÉ DE COMPRESSION D'UN FLUX DE DONNÉES VIDÉO**

(30) Priorité: 04.09.2015 FR 1558240
(71) Demandeur: STMicroelectronics (Grenoble 2) SAS, 38000 Grenoble (FR)
(72) Inventeur: FRELLO, Dario, 38360 SASSENAGE (FR); SCHNEIDER, Olivier, 38330 MONTBONNOT SAINT MARTIN (FR)
(74) Mandataire: Thibon, Laurent

(57) **Abrégé**

L'invention concerne un procédé de compression d'un flux d'images vidéo, dans lequel des paramètres de compression sont adaptés (19, 27) en fonction d'au moins un critère de compression évalué (21) pour chaque image et choisi parmi la complexité spatiale, la complexité temporelle et le rapport entre le nombre de prédictions intra-image et le nombre de prédictions inter-image.

## Description

### Domaine

La présente demande concerne un procédé de compression d'un flux de données vidéo.

### Exposé de l'art antérieur

Les procédés de compression vidéo visent à réduire la quantité de données représentatives d'une vidéo tout en minimisant l'impact sur la qualité de la vidéo.

On connaît des procédés de compression normalisés tels que H.264 (MPEG-4 AVC) et H.265 (MPEG HEVC) qui fournissent des vidéos compressées dans des formats adaptés au stockage et à la diffusion de vidéos, notamment de vidéos haute définition. De tels procédés de compression diminuent la quantité de données en supprimant les données redondantes. Pour cela, les données d'une zone d'une image de la vidéo sont prédites à partir des données d'une autre zone de cette même image (prédiction intra-image), ou à partir des données d'une zone, d'une ou plusieurs autres images de la vidéo, associée à un ou plusieurs vecteurs de mouvement (prédiction inter-image).

Les données vidéo sont compressées par un encodeur matériel et/ou logiciel au fur et à mesure que le flux de données vidéo est fourni à l'encodeur. En réception, les données vidéo sont décompressées par un décodeur matériel et/ou logiciel correspondant, au fur et à mesure de la réception du flux de données vidéo compressées. La transmission du flux de données vidéo compressées de l'encodeur au décodeur peut prendre diverses formes, par exemple le réseau hertzien de diffusion numérique terrestre de télévision, les réseaux téléphoniques, le réseau internet, etc.

Dans les procédés connus de compression vidéo, des paramètres, ou options, de compression sont fixés au début de la compression du flux de données vidéo. Ces paramètres sont déterminés en fonction de performances cibles.

Un tel fonctionnement présente divers inconvénients à au moins certains desquels la présente demande vise à remédier.

### Résumé

Ainsi, un mode de réalisation prévoit un procédé de compression d'un flux d'images vidéo, dans lequel des paramètres de compression sont adaptés en fonction d'au moins un critère de compression évalué pour chaque image et choisi parmi la complexité spatiale, la complexité temporelle et le rapport entre le nombre de prédictions intra-image et le nombre de prédictions inter-image.

Selon un mode de réalisation, un écart entre des performances de compression mesurées et des performances cibles de compression est calculé.

Selon un mode de réalisation, l'évaluation d'un critère de compression comprend le calcul d'une valeur représentative du critère et la comparaison de la valeur représentative à un seuil.

Selon un mode de réalisation, le seuil est adapté en fonction dudit écart.

Selon un mode de réalisation, les paramètres de compression sont adaptés en fonction dudit écart.

Selon un mode de réalisation, le seuil est adapté en fonction dudit au moins un critère évalué pour chaque image.

Selon un mode de réalisation, chaque image est découpée en blocs de pixels et chacun desdits blocs est subdivisé en sous-blocs de pixels, ledit au moins un critère étant évalué pour au moins certains desdits blocs.

Selon un mode de réalisation, les paramètres de compression d'un bloc sont adaptés en fonction dudit au moins un critère évalué pour le bloc.

Selon un mode de réalisation, les critères de compression comprennent en outre le coût de partitionnement.

Selon un mode de réalisation, les prédictions intra-image et/ou inter-image sont effectuées pour seulement certains des sous-blocs subdivisant un bloc, lesdits certains sous-blocs étant choisis en fonction dudit au moins un critère de compression évalué pour le bloc et en fonction des dimensions desdits certains sous-blocs.

Un autre mode de réalisation prévoit un dispositif de calcul adapté à mettre en oeuvre le procédé susmentionné, comprenant : au moins un dispositif de traitement ; une mémoire d'instructions adaptée à stocker des instructions de programme d'ordinateur ; et au moins une interface d'entrée/sortie.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma-bloc d'un dispositif de calcul adapté à réaliser une compression vidéo ;
la figure 2 est un organigramme illustrant des étapes d'un procédé de compression vidéo ;
la figure 3 est un organigramme illustrant des étapes d'un mode de réalisation d'un procédé de compression vidéo ; et
la figure 4 est un organigramme illustrant des étapes d'une variante du procédé de la figure 3.

### Description détaillée

De mêmes éléments ont été désignés par de mêmes références aux différentes figures. Sauf précision contraire, le terme "sensiblement" signifie à 10 % près, de préférence à 5 % près.

Dans la description suivante, on fera principalement référence au procédé de compression normalisé, ou norme, HEVC. Cette norme est aussi appelée norme MPEG HEVC, référencée ISO/IEC 23008-2. Le cahier des charges de cette norme est par exemple publié avec le titre "High Efficiency Video Coding (HEVC) text specification draft 10 (for FDIS & Consent)", B.Bross et al., Joint Collaborative Team on Video Coding (JCT-VC), document JCTVC-K1003, 12th Meeting: Geneva, CH, 14-23 janvier 2013. Un document présentant une vue d'ensemble de cette norme est intitulé "Overview of the High Efficiency Video Coding (HEVC) Standard", G.Sullivan et al., dont une version préliminaire apparaît dans "IEEE Trans. on circuits and systems for video technology", décembre 2012. Le contenu des deux documents ci-dessus fait partie de la présente description dans les limites où cela est autorisé par la loi.

Il sera clair pour l'homme de l'art que les modes de réalisation décrits ci-dessous peuvent s'appliquer également à d'autres procédés de compression, par exemple au procédé de compression normalisé H.264. En outre, ces modes de réalisation peuvent être mis en oeuvre de façons matérielle et/ou logicielle.

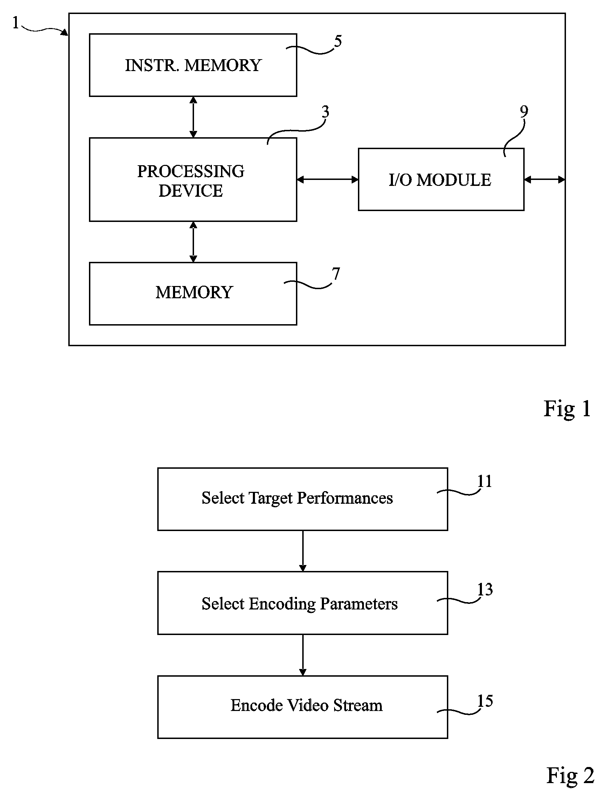

La figure 1 est un schéma-bloc d'un exemple de dispositif de calcul 1 adapté à mettre en oeuvre un procédé de compression vidéo.

Le dispositif de calcul 1 comprend, par exemple, un ou plusieurs dispositifs de traitement 3 (PROCESSING DEVICE), par exemple un ou plusieurs processeurs et/ou microprocesseurs. Le dispositif de traitement 3 est par exemple commandé par une mémoire d'instructions 5 (INSTR. MEMORY) stockant des instructions de programme. Lorsque ces instructions sont exécutées, par exemple par le dispositif de traitement 3, elles mettent en oeuvre des étapes d'un procédé de compression vidéo. Dans des variantes de réalisation, l'implémentation des fonctions du dispositif de calcul 1 est matérielle.

Le dispositif de calcul 1 peut aussi comprendre un ou plusieurs dispositifs de stockage 7 (MEMORY) pouvant être couplés au dispositif de traitement 3 et stockant notamment des données vidéo et/ou des données calculées pendant la compression d'une vidéo.

En outre, le dispositif de calcul 1 comprend une ou plusieurs interfaces d'entrée/sortie 9 (I/O MODULE) pouvant être couplées au dispositif de traitement 3.

La figure 2 illustre de manière schématique des étapes d'un exemple de procédé de compression d'un flux de données vidéo mis en oeuvre, par exemple, par le dispositif de calcul de la figure 1.

A une étape 11, un encodeur mettant en oeuvre le procédé de compression vidéo reçoit des premières données d'un flux vidéo à compresser. Des performances cibles de compression sont sélectionnées (Select Target Performances) par un client, ou utilisateur, en fonction d'une application visée, par exemple la retransmission télévisée en haute définition d'un événement sportif. Les performances cibles de compression correspondent par exemple au format de la vidéo à compresser, en particulier à la définition de la vidéo, au débit cible minimum d'images compressées et au débit cible maximum de données compressées que l'encodeur doit respecter.

A une étape 13 suivante, des paramètres, ou options, de compression de l'encodeur sont sélectionnés (Select Encoding Parameters) en se basant sur les performances cibles de compression. En effet, les paramètres de compression de l'encodeur permettent de définir un compromis entre les performances de compression et la qualité de compression de l'encodeur. La qualité de compression correspond au rendu visuel de la vidéo une fois décompressée. Une modification des paramètres de compression entraîne une amélioration de la qualité de compression et une diminution des performances de compression, ou l'inverse. Les paramètres de compression dépendent du procédé de compression vidéo mis en oeuvre. Par exemple, lorsque l'on utilise le procédé de compression normalisé MPEG HEVC, les paramètres de compression comprennent :
- l'activation ou la désactivation de l'estimation de la chrominance ;
- la longueur maximale et la précision maximale des vecteurs de mouvement ;
- le nombre d'évaluations réalisées pour la fusion des vecteurs de mouvement ;
- la dimension maximale de blocs de l'image ;
- la dimension minimale de sous-blocs ;
- la taille de la transformée en cosinus discrète ;
- le type et le nombre de filtres ; et/ou
- le nombre de bits de chaque composante colorimétrique.

La liste de paramètres de compression ci-dessus n'est pas exhaustive. Pour la norme MPEG HEVC, les paramètres de compression sont liés aux paramètres de décompression du décodeur qui sont répertoriés dans les documents cités précédemment.

En pratique, les paramètres de compression d'un encodeur ne sont pas sélectionnés un à un mais sont prédéfinis par rapport à des performances cibles de compression correspondant, par exemple, à un niveau et à un profil de compression. En reprenant l'exemple de la norme MPEG HEVC, le profil "Main 10" et le niveau 4 peuvent être sélectionnés pour compresser une vidéo dont la définition est 1280 pixels par 720 pixels avec un débit minimum de 68 images par seconde et un débit de données maximum de 30 kbit par seconde.

A une étape 15 suivante, le flux de données vidéo est compressé par l'encodeur (Encode Video Stream) avec les paramètres sélectionnés à l'étape 13 et l'encodeur génère un flux de données vidéo compressées.

Dans un tel procédé de compression, les paramètres sont fixés indépendamment du contenu de la vidéo, et de manière à respecter des performances cibles de compression quel que soit le contenu de cette vidéo.

Un inconvénient est que la qualité de compression et les performances de compression ne sont pas liées au contenu des différentes scènes de la vidéo à compresser.

On propose de modifier les paramètres de compression d'un procédé de compression vidéo en fonction du contenu des scènes de la vidéo à compresser afin d'augmenter la qualité de compression et/ou les performances de compression.

Pour cela, on se base sur des critères de compression tels que le coût de partitionnement, la complexité spatiale, la complexité temporelle et le rapport entre le nombre de prédictions intra-image et le nombre de prédictions inter-image. Ces critères donnent des informations sur le contenu des scènes de la vidéo à compresser.

Le coût de partitionnement d'un bloc de pixels d'une image correspond au coût de compression du bloc et dépend de la manière dont ce bloc est subdivisé récursivement en sous-blocs.

La complexité spatiale d'une image vidéo est un critère représentatif de la quantité d'informations contenue dans chaque bloc de pixels de l'image, et de la manière dont ces informations sont réparties dans le bloc.

La complexité temporelle d'une image vidéo est un critère représentatif du mouvement des pixels de l'image par rapport à des pixels correspondants à d'autres images de la vidéo. En particulier, ce critère indique si les pixels d'un bloc sont en mouvement dans des directions sensiblement identiques ou dans des directions différentes.

Le rapport entre le nombre de prédictions inter-image et le nombre de prédictions intra-image, ou rapport inter-intra, est un critère représentatif de la manière dont les pixels de chaque bloc d'une image sont prédits, notamment si ces pixels sont majoritairement prédits à partir des pixels des blocs voisins ou à partir des pixels d'autres images de la vidéo associés à des vecteurs de mouvements.

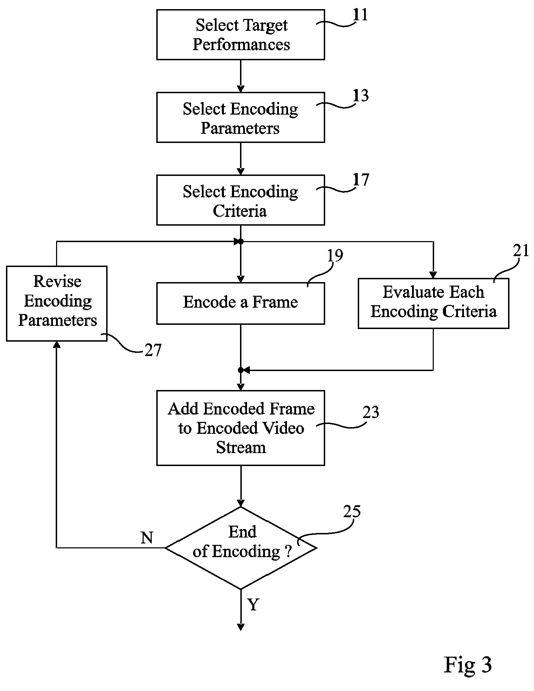

La figure 3 est un organigramme illustrant des étapes d'un mode de réalisation d'un procédé de compression vidéo.

De manière similaire au procédé décrit en relation avec la figure 2, le procédé de la figure 3 comprend l'étape 11 de sélection des performances cibles et l'étape 13 de sélection des paramètres de compression en se basant sur les performances cibles.

A une étape 17 suivante, on choisit au moins un critère de compression (Select Encoding Criteria) parmi la complexité spatiale, la complexité temporelle, le coût de partitionnement et le rapport inter-intra.

Deux étapes 19 et 21, respectivement de compression d'une image (Encode a Frame) et d'évaluation des critères de compression (Evaluate Each Encoding Criteria), sont alors exécutées en parallèle.

L'étape 19 de compression d'une image comprend le découpage de l'image en blocs de dimension maximale et la subdivision récursive de chaque bloc en sous-blocs de dimensions de plus en plus petites. A titre d'exemple, dans la norme MPEG HEVC, chaque bloc est représenté sous la forme d'un arbre quadratique CTB (de l'anglais "Coding Tree Block"), et chaque sous-bloc correspond à une unité à compresser CU (de l'anglais "Coding Unit").

On appelle "profondeur de découpage" d'un bloc, le nombre de dimensions différentes de sous-blocs utilisées pour subdiviser ce bloc. Par exemple, un bloc de 64 pixels par 64 pixels découpé avec une profondeur de 2 peut être divisé en sous-blocs de 32 pixels par 32 pixels, eux-mêmes pouvant être divisés en sous-blocs de 16 pixels par 16 pixels. On appelle "partition", un bloc ou un sous-bloc d'une image.

Les pixels de chaque partition de l'image sont alors prédits en évaluant plusieurs modes de prédiction intra-image et inter-image pour cette partition, les modes de prédiction évalués dépendant des paramètres de compression. L'un des modes de prédiction évalués est ensuite sélectionné pour compresser la partition, par exemple en se basant sur la valeur de l'optimisation débit-distorsion, ou RDO de l'anglais "Rate Distortion Optimization", calculée pour chaque mode de prédiction évalué.

A titre d'exemple, dans le cas de la norme MPEG HEVC, lors de la prédiction intra-image des pixels d'une partition, différents modes de prédiction intra-image peuvent être évalués, à savoir le mode plan, moyen ou angulaire, le mode angulaire pouvant supporter jusqu'à 33 directions de prédiction dont le mode vertical et le mode horizontal. Lors de la prédiction inter-image des pixels d'une partition, le nombre de modes de prédiction inter-image évalués dépend notamment du nombre d'images utilisées pour chercher une partition de référence, de la longueur maximale et de la précision maximale des vecteurs de mouvement, et du nombre de vecteurs de mouvement pouvant être fusionnés dans chaque partition.

L'étape 21 d'évaluation des critères de compression sélectionnés à l'étape 17 est effectuée sur l'image compressée à l'étape 19.

La complexité spatiale de l'image est évaluée à partir de la complexité spatiale de chacun des blocs de l'image. Pour cela, lors de l'évaluation des modes de prédiction intra-image de chaque bloc, la complexité spatiale du bloc est évaluée en mesurant ou en calculant une valeur représentative de la complexité spatiale de ce bloc. Cette valeur représentative de la complexité spatiale est alors comparée à au moins un premier seuil pour déterminer si le bloc est spatialement complexe, c'est-à-dire qu'il correspond à une zone de l'image comprenant de nombreux détails, ou si le bloc est spatialement simple, c'est-à-dire qu'il correspond à une zone homogène de l'image. Le nombre de blocs spatialement complexes et le nombre de blocs spatialement simples de l'image sont alors comparés à au moins un deuxième seuil pour déterminer si l'image est spatialement complexe, c'est-à-dire qu'elle comprend majoritairement des zones comprenant de nombreux détails, ou est spatialement simple, c'est-à-dire qu'elle comprend majoritairement des zones homogènes.

A titre d'exemple, la complexité spatiale d'un bloc est évaluée en calculant la différence entre la plus petite somme des valeurs absolues des résidus, ou SAD (de l'anglais "Sum of Absolute Difference"), du bloc pour les modes de prédiction intra-image simples (plan, moyen et éventuellement horizontal et vertical) et la plus petite somme des valeurs absolues des résidus (SAD) du bloc pour tous les modes de prédiction intra-image évalués. Si cette différence est supérieure à un seuil THR_COMPLEX_BLOC, le bloc est spatialement complexe et est marqué COMPLEX. Si cette différence est inférieure à un seuil THR_FLAT_BLOC, le bloc est spatialement simple et est marqué FLAT. Si cette différence est comprise entre les seuils THR_COMPLEX_BLOC et THR_FLAT_BLOC, le bloc n'est pas marqué. De manière avantageuse, les valeurs SAD ont été calculées lors de l'évaluation des modes de prédiction intra-image du bloc. Ainsi, calculer la complexité spatiale d'un bloc ne requiert que peu de temps et de puissance de calcul supplémentaires. L'image est spatialement complexe et est marquée COMPLEX_FRAME si le nombre de blocs COMPLEX est supérieur à un seuil THR_COMPLEX_FRAME. De manière similaire, l'image est spatialement plane et est marquée FLAT_FRAME si le nombre de blocs FLAT est supérieur à un seuil THR_FLAT_FRAME.

La complexité temporelle de l'image est évaluée de manière similaire à la complexité spatiale. Lors de l'évaluation des modes de prédiction inter-image de chaque bloc de l'image, une valeur représentative de la complexité temporelle du bloc est mesurée ou calculée. Cette valeur représentative de la complexité temporelle est alors comparée à au moins un troisième seuil pour déterminer si le bloc est temporellement homogène, c'est-à-dire que les pixels du bloc se déplacent de manière sensiblement identique par rapport aux pixels d'un bloc de référence d'une autre image, par exemple dans la même direction et avec la même vitesse, ou si le bloc est temporellement inhomogène, c'est-à-dire que les pixels du bloc se déplacent dans des directions différentes par rapport aux pixels du bloc de référence. Le nombre de blocs temporellement homogènes et le nombre de blocs temporellement inhomogènes de l'image sont alors comparés à au moins un quatrième seuil pour déterminer si l'image est temporellement homogène ou temporellement inhomogène.

A titre d'exemple, la complexité temporelle d'un bloc est évaluée en calculant le nombre de vecteurs de mouvement cohérents du bloc, deux vecteurs de mouvement d'un bloc étant cohérents si leurs directions et leurs longueurs sont sensiblement égales. Si ce nombre est supérieur à un seuil THR_MOTION, le bloc est temporellement homogène et est marqué HOMOGENEOUS. Sinon, le bloc est temporellement inhomogène et est marqué INHOMOGENEOUS. L'image est temporellement homogène et est marquée HOMOGENEOUS_FRAME si le nombre de blocs HOMOGENEOUS est supérieur à un seuil THR_HOMOGENEOUS_FRAME. De manière similaire, une image est temporellement inhomogène et est marquée INHOMOGENEOUS_FRAME si le nombre de blocs INHOMOGENEOUS est supérieur à un seuil THR_INHOMOGENEOUS_FRAME.

L'évaluation de la complexité temporelle de l'image peut, en outre, comprendre une étape consistant à calculer la différence de longueur DIFF_MV entre la longueur maximale des vecteurs de mouvement, définie par les paramètres de compression, et celle du plus long vecteur de mouvement utilisé pour prédire des pixels de l'image.

L'évaluation du rapport inter-intra consiste par exemple à calculer le rapport entre le nombre de partitions de l'image prédites selon un mode de prédiction inter-image et le nombre de partitions de l'image prédites selon un mode de prédiction intra-image.

A une étape 23 suivante, les données compressées représentatives de l'image sont ajoutées au flux de données vidéo compressées (Add Encoded Frame to Encoded Video Stream).

Un test 25 (End of Encoding?) est alors effectué pour vérifier si toutes les images de la vidéo ont été compressées.

Si toutes les images de la vidéo ont été compressées (sortie Y du bloc 25), le procédé de compression du flux vidéo est terminé.

Si une ou plusieurs images de la vidéo n'ont pas encore été compressées (sortie N du bloc 25), les paramètres de compression peuvent être adaptés (Revise Encoding Parameters) à une étape 27 suivante. Les paramètres de compression sont modifiés en se basant sur l'évaluation des critères de compression, et donc sur le contenu de l'image qui vient d'être compressée. Les paramètres de compression modifiés sont utilisés lors des compressions suivantes d'images de la vidéo, à l'étape 19.

En reprenant l'exemple précédent, dans le cas où l'image est marquée COMPLEX_FRAME, l'évaluation des modes de prédiction inter-image des partitions de grandes dimensions, par exemple supérieures à 32 pixels par 32 pixels, peut être désactivée. En outre, l'estimation de la chrominance et/ou certains filtres peuvent être désactivés. La désactivation de la chrominance n'entraîne qu'une diminution négligeable de la qualité de compression du fait que le système de vision humain, ou HVS de l'anglais "Human System Vision", est moins sensible aux artéfacts, ou effets de blocs, dans une image comprenant de nombreux détails. De telles modifications des paramètres de compression entraînent une diminution de la puissance de calcul utilisée pour les compressions suivantes d'images, et donc une diminution de la durée des compressions suivantes d'images. Il en résulte une amélioration des performances de compression. Dans le cas où l'image est marquée FLAT_FRAME, l'estimation de la chrominance et/ou certains filtres peuvent être activés pour améliorer la qualité de la compression, et/ou la profondeur de découpage peut être diminuée pour améliorer les performances de compression.

Dans le cas où l'image est marquée HOMOGENEOUS_FRAME, le nombre d'évaluations réalisées pour la fusion des vecteurs de mouvement et/ou la précision d'évaluation des vecteurs de mouvement peuvent être augmentés pour améliorer la qualité des compressions suivantes d'images. Dans le cas où l'image est marquée INHOMOGENEOUS_FRAME, les valeurs des critères de compression susmentionnés peuvent être diminuées pour améliorer les performances de compression. En outre, dans le cas où la valeur DIFF_MV a été calculée et est supérieure à un seuil THR_DIFF_MV, la longueur maximale des vecteurs de mouvement peut être diminuée pour améliorer les performances des compressions suivantes d'images avec un effet négligeable sur la qualité de compression.

Dans le cas où le rapport inter-intra est supérieur à un seuil THR_INTER, les paramètres de compression peuvent être adaptés pour favoriser les prédictions inter-image des partitions de l'image. Lorsque le rapport inter-intra est inférieur à un seuil THR_INTRA, les paramètres de compression peuvent être adaptés pour favoriser les prédictions intra-image des partitions de l'image.

Du fait que les paramètres de compression sont modifiés en fonction du contenu d'une image d'une scène vidéo et que les images d'une même scène vidéo ont généralement un contenu similaire, les paramètres modifiés sont alors adaptés au contenu des autres images de cette scène. Il en résulte une amélioration des performances de compression et/ou de la qualité de compression de cette scène vidéo.

Dans une variante du procédé de la figure 3, on prévoit, en outre, que certains paramètres de compression soient modifiés, à l'étape 19, pendant la compression d'un bloc. On peut également prévoir de désactiver l'évaluation des modes de prédiction inter-image et/ou intra-image pour certaines dimensions de sous-blocs subdivisant ce bloc. Pour cela, on se base sur la complexité spatiale et/ou la complexité temporelle, et éventuellement le coût de partitionnement, évalués pour ce bloc. Cela permet d'adapter la compression du bloc en fonction de son contenu.

En reprenant l'exemple précédent, on considère par exemple un bloc de 64 pixels par 64 subdivisé récursivement en sous-blocs.

Lors de l'évaluation des modes de prédiction intra-image, dans le cas où le bloc est marqué FLAT, l'évaluation des modes de prédiction intra-image peut être désactivée pour les sous-blocs du bloc ayant de petites dimensions, par exemple inférieures ou égales à 16 pixels par 16 pixels. Dans le cas où le bloc est marqué COMPLEX, l'évaluation des modes de prédiction intra-image peut être désactivée pour les sous-blocs du bloc ayant de grandes dimensions, par exemple supérieures ou égales à 32 pixels par 32 pixels.

Lors de l'évaluation des modes de prédiction inter-image, dans le cas où le bloc est marqué HOMOGENEOUS, l'estimation des modes de prédiction inter-image peut être désactivée pour les sous-blocs du bloc ayant de petites dimensions. Dans le cas où le bloc est marqué INHOMOGENEOUS, l'estimation des modes de prédiction inter-image peut être désactivée pour les sous-blocs du bloc ayant de grandes dimensions. En outre, indépendamment du fait que le bloc soit INHOMOGENEOUS ou HOMOGENEOUS, si le bloc est marqué FLAT, l'estimation des modes de prédiction inter-image peut être désactivée pour les sous-blocs du bloc ayant de petites dimensions.

Lorsque le coût de partitionnement est l'un des critères de compression sélectionnés à l'étape 17, le coût de partitionnement d'un bloc est évalué pour différentes profondeurs de découpage, en commençant par la plus grande profondeur de découpage définie par les paramètres de compression. Le coût de partitionnement du bloc pour une profondeur de découpage X, avec X entier compris entre 1 et 4 dans le cas de la norme MPEG HEVC, est comparé avec le coût de partitionnement de ce bloc pour une profondeur de découpage X-1. Si la différence entre ces coûts de partitionnement est supérieure à un seuil DELTA_OPT, les modes de prédiction inter-image et/ou intra-image peuvent ne pas être évalués pour ce bloc découpé selon des profondeurs inférieures à X-1. De préférence, le coût de partitionnement d'un bloc est évalué lorsque le bloc n'a pas été marqué lors de l'évaluation de la complexité spatiale et/ou de la complexité temporelle.

Dans cette variante, pour compresser un bloc, l'évaluation des modes de prédiction intra-image et/ou inter-image n'est effectuée que pour certaines profondeurs de découpage et/ou pour certaines dimensions des sous-blocs subdivisant le bloc. Il en résulte une diminution du temps de compression du bloc, donc une amélioration des performances de compression. En outre, l'impact sur la qualité de compression est négligeable du fait que l'évaluation des modes de prédiction inter-image et/ou intra-image n'est désactivée que pour les sous-blocs comprenant le moins d'information.

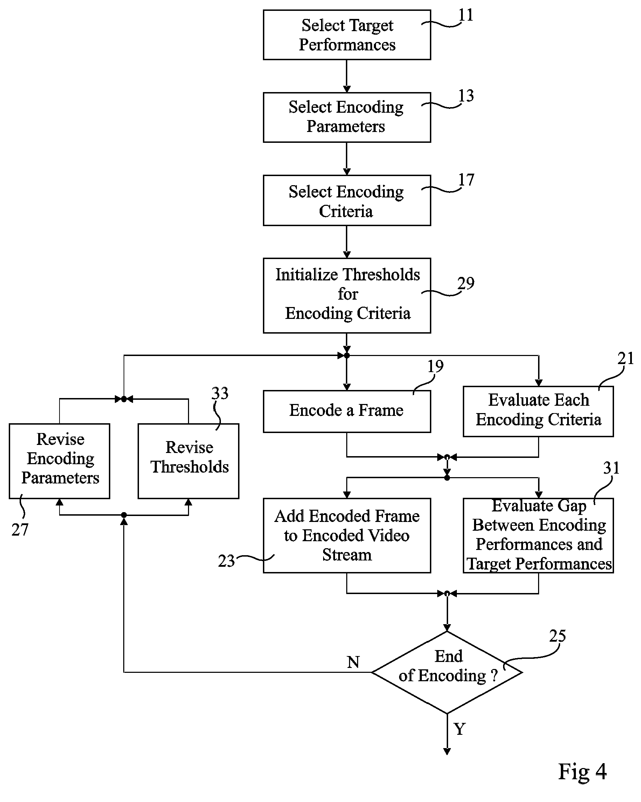

La figure 4 est un organigramme d'une autre variante du procédé de la figure 3 dans laquelle on propose de modifier les paramètres de compression et/ou les valeurs des seuils associés aux critères de compression en fonction de l'évaluation des critères de compression et éventuellement de l'écart entre les performances de compression réelles, ou mesurées, et les performances cibles.

Dans cette variante, de manière similaire au procédé décrit en relation avec la figure 3, des performances cibles sont sélectionnées à l'étape 11, des paramètres de compression sont sélectionnés à l'étape 13 en se basant sur les performances cibles, et au moins un critère de compression est sélectionné à l'étape 17.

A une étape 29 suivante, les seuils associés aux critères sélectionnés sont initialisés (Initialize Thresholds for Encoding Criteria). La valeur initiale d'un seuil peut être fixe ou dépendre de l'application.

Par exemple, les valeurs initiales des seuils THR_COMPLEX_FRAME, THR_FLAT_FRAME, THR_HOMOGENEOUS_FRAME et THR_INHOMOGENEOUS_FRAME peuvent augmenter ou diminuer en se basant sur la définition de la vidéo à compresser pour tenir compte du fait que le nombre de blocs d'une image augmente ou diminue quand la définition de l'image augmente ou diminue.

Après l'étape 29, les étapes 19 et 21 sont effectuées sur une image de la vidéo de la façon décrite en relation avec la figure 3. A l'étape 23, les données compressées représentatives de cette image sont ajoutées au flux de données compressées.

A une étape 31, effectuée en parallèle de l'étape 23, les performances de compression de l'encodeur sont mesurées et l'écart avec les performances cibles de compression est calculé (Evaluate Gap Between Encoding Performances and Target Performances). Par exemple, l'encodeur calcule l'écart entre les débits mesuré et cible de données compressées et/ou l'écart entre les débits mesuré et cible d'images compressées.

Après les étapes 23 et 31, le test 25 est effectué. S'il reste des images à compresser (sortie N du bloc 25), les paramètres de compression peuvent être adaptés à l'étape 27, éventuellement en fonction de l'écart entre les performances réelles et cibles.

A une étape 33 effectuée en parallèle de l'étape 27, les valeurs de seuil associées aux critères de compression peuvent être modifiées (Revise Thresholds) en tenant compte de l'évaluation de ces critères.

En reprenant les exemples décrits en relation avec la figure 3, une augmentation de la valeur du seuil THR_FLAT_BLOC entraîne une augmentation du nombre de blocs marqués FLAT _BLOC par image lors des compressions suivantes d'images. Il en résulte une diminution du temps de compression et/ou du débit de données compressées. Afin que l'augmentation de la valeur du seuil THR_FLAT_BLOC n'entraîne qu'une diminution négligeable de la qualité de compression, c'est-à-dire une diminution de moins de 10 %, de préférence de moins de 5 %, l'augmentation du nombre de blocs marqués FLAT_BLOC dans les prochaines images compressées peut être comparée à l'augmentation de la valeur du seuil THR_FLAT_BLOC. La valeur du seuil THR_FLAT_BLOC peut être diminuée si ces augmentations ne sont pas corrélées.

De manière similaire, une diminution de la valeur du seuil THR_COMPLEX_BLOC entraîne une augmentation du nombre de blocs marqués COMPLEX_BLOC par image lors des compressions suivantes d'images, et donc une amélioration des performances de compression. Comme pour le seuil THR_FLAT_BLOC, on étudie la corrélation entre la diminution de la valeur du seuil THR_COMPLEX_BLOC et l'augmentation du nombre de blocs marqués COMPLEX_BLOC par image. Lorsque ces variations ne sont pas corrélées, la valeur de THR_COMPLEX_BLOC est ajustée pour diminuer l'impact de la modification du seuil THR_COMPLEX_BLOC sur la qualité de compression.

La valeur du seuil DELTA_OPT relatif au coût de partitionnement peut être augmentée, notamment quand le nombre de blocs non marqués d'une image d'une scène vidéo est important, par exemple supérieur à 30 % du nombre total de blocs de l'image. Cela entraîne une diminution du temps de compression lors des compressions suivantes d'images de cette scène vidéo, donc du débit de données compressées. Il en résulte une amélioration des performances de compression.

A l'étape 33, les modifications des valeurs de seuil peuvent également être effectuées en tenant compte des écarts de performances mesurés à l'étape 31. Par exemple, l'augmentation de la valeur du seuil THR_FLAT_BLOC, l'augmentation de la valeur DELTA_OPT, et/ou la diminution de la valeur du seuil THR_COMPLEX_BLOC peuvent être effectuées quand le débit de données compressées mesuré à l'étape 31 est égal, par exemple à moins de 5 % près, au débit cible de données compressées, et/ou quand le débit d'images mesuré à l'étape 31 est inférieur, par exemple de plus de 5 %, au débit cible d'images compressées.

Du fait que les valeurs des seuils sont modifiées en tenant compte, pour plusieurs images compressées, de l'évaluation des critères de compression et des écarts de performances calculés à l'étape 31, les performances mesurées convergent vers les performances cibles, indépendamment des valeurs initiales des seuils.

Des tests ont montré que, dans le cas où un premier et un deuxième encodeurs mettent en oeuvre la norme MPEG HEVC, si l'on applique le procédé de compression de la figure 4 au deuxième encodeur, le deuxième encodeur peut fournir un débit d'images deux fois plus important que le premier encodeur avec une diminution de seulement 2 à 8 % de la qualité de compression, ou fournir une qualité de compression deux fois plus importante que le premier encodeur avec des performances de compression sensiblement identiques. Favoriser la qualité de compression ou les performances de compression dépend notamment du choix des paramètres de compression qui sont modifiés et de la nature des modifications effectuées.

Des modes de réalisation particuliers ont été décrits. Diverses variantes et modifications apparaîtront à l'homme de l'art. En particulier, afin d'améliorer les performances et/ou la qualité de compression, l'homme du métier pourra effectuer d'autres modifications de paramètres de compression que celles décrites précédemment, en se basant sur l'évaluation des critères de compression et éventuellement sur l'écart entre les performances de compression mesurées et les performances cibles de compression.

Bien que l'on ait décrit des exemples de valeurs représentatives des critères de compression, d'autres valeurs peuvent être utilisées. Par exemple, la complexité spatiale peut être évaluée en se basant sur les équations (1) et (3) de l'article "IMAGE COMPLEXITY AND SPATIAL INFORMATION" de Honghai Yu et Stefan Winkler, présenté en 2013 dans "Fifth International Workshop on Quality of Multimedia Experience (QoMEX)".

L'ordre et le nombre des étapes décrites en relation avec les figures 3 et 4 peuvent être modifiés par l'homme du métier. Par exemple, on peut prévoir une étape supplémentaire de détection de changement de contenu dans une vidéo en cours de compression. On peut également prévoir de modifier la sélection des critères de compression et/ou de réinitialiser les valeurs de seuil associées aux critères de compression, par exemple lorsqu'un changement de contenu est détecté. En outre, au lieu d'ajouter, au flux de données compressées, toutes les données compressées représentatives d'une image lors de l'étape 23, ces données peuvent être ajoutées au flux au fur et à mesure de la compression de l'image. Dans ce cas, la mesure des performances de compression est par exemple effectuée en continu, périodiquement, ou après la compression de chaque bloc de l'image.

## Revendications

1. Procédé de compression d'un flux d'images vidéo, dans lequel des paramètres de compression sont adaptés (19, 27) en fonction d'au moins un critère de compression évalué (21) pour chaque image et choisi parmi la complexité spatiale, la complexité temporelle et le rapport entre le nombre de prédictions intra-image et le nombre de prédictions inter-image.

2. Procédé de compression selon la revendication 1, dans lequel un écart entre des performances de compression mesurées et des performances cibles de compression est calculé (31).

3. Procédé de compression selon la revendication 1 ou 2, dans lequel l'évaluation d'un critère de compression (21) comprend le calcul d'une valeur représentative du critère et la comparaison de la valeur représentative à un seuil.

4. Procédé de compression selon les revendications 2 et 3, dans lequel le seuil est adapté (33) en fonction dudit écart.

5. Procédé de compression selon la revendication 2 ou 4, dans lequel les paramètres de compression sont adaptés (19, 27) en fonction dudit écart.

6. Procédé de compression selon la revendication 3 ou 4, dans lequel le seuil est adapté (33) en fonction dudit au moins un critère évalué (21) pour chaque image.

7. Procédé de compression selon l'une quelconque des revendications 1 à 6, dans lequel chaque image est découpée (19) en blocs de pixels et chacun desdits blocs est subdivisé (19) en sous-blocs de pixels, ledit au moins un critère étant évalué (21) pour au moins certains desdits blocs.

8. Procédé de compression selon la revendication 7, dans lequel les paramètres de compression d'un bloc sont adaptés (19) en fonction dudit au moins un critère évalué (21) pour le bloc.

9. Procédé de compression selon la revendication 7 ou 8, dans lequel les critères de compression comprennent en outre le coût de partitionnement.

10. Procédé de compression selon l'une quelconque des revendications 7 à 9, dans lequel les prédictions intra-image et/ou inter-image sont effectuées (19) pour seulement certains des sous-blocs subdivisant un bloc, lesdits certains sous-blocs étant choisis en fonction dudit au moins un critère de compression évalué (21) pour le bloc et en fonction des dimensions desdits certains sous-blocs.

11. Dispositif de calcul (1) adapté à mettre en oeuvre le procédé selon l'une quelconque des revendications 1 à 9, comprenant :
au moins un dispositif de traitement (3) ;
une mémoire d'instructions (5) adaptée à stocker des instructions de programme d'ordinateur ; et
au moins une interface d'entrée/sortie (9).
